# FASCICULE DE BREVET EUROPEEN

(11) **EP 2 649 664 B1**
(45) Date de publication et mention de la délivrance du brevet: **04.03.2015**
(21) Numéro de dépôt: 11773775.9
(22) Date de dépôt: 26.09.2011
(51) Int. Cl.: H01M 8/10, H01M 4/86, H01M 8/02, H01M 4/88

(54) **COUCHE DE DIFFUSION GAZEUSE POUR PILE A COMBUSTIBLE**
GASDIFFUSIONSSCHICHT FÜR EINE BRENNSTOFFZELLE
GASEOUS DIFFUSION LAYER FOR FUEL CELL

(30) Priorité: 09.12.2010 FR 1060282
(43) Date de publication de la demande: 16.10.2013
(73) Titulaire: Commissariat à l'Énergie Atomique et aux Énergies Alternatives, 75015 Paris (FR)
(72) Inventeur: ROUILLON, Ludovic, F-38250 Villard de Lans (FR); PAUCHET, Joël, F-38140 Saint Martin D'uriage (FR)
(74) Mandataire: Cabinet Laurent & Charras
(86) Numéro de dépôt international: PCT/FR2011/052232
(87) Numéro de publication internationale: WO 2012/076774

(56) Documents cités:
- WO-A2-03/096451
- US-A- 5 952 119

## Description

### DOMAINE DE L'INVENTION

La présente invention concerne une couche de diffusion gazeuse (ou GDL pour l'acronyme anglo-saxon « *Gas Diffusion Layer »*) pour pile à combustible à membrane échangeuse de protons (PEMFC), comprenant un fil hydrophile conducteur électronique au sein de sa structure.

Le domaine d'utilisation de la présente invention est relatif à celui des PEMFC, et donc aux applications concernant les générateurs de courant en général.

### ETAT ANTERIEUR DE LA TECHNIQUE

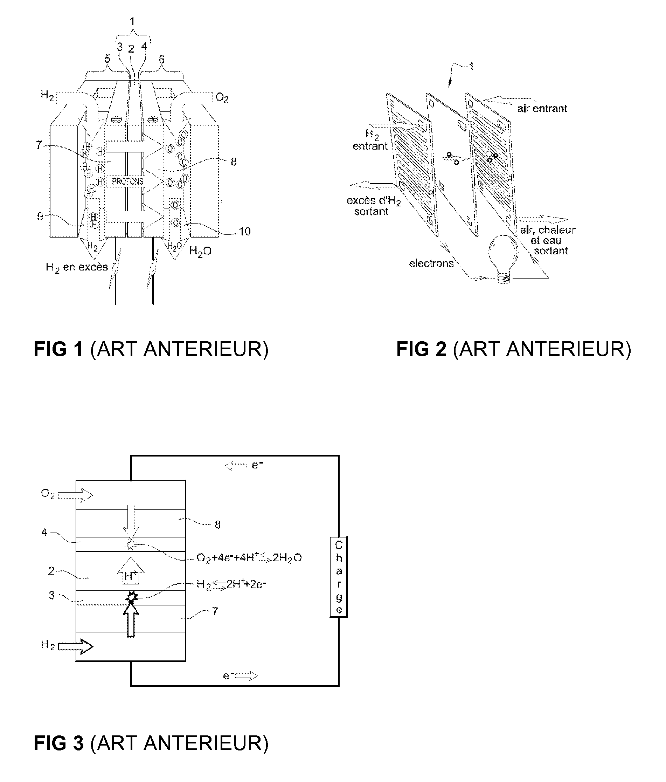

Les piles à combustible à membrane échangeuse de protons (PEMFC pour l'acronyme anglo-saxon « *Proton Exchange Membrane Fuel Cell »*) sont des générateurs de courant, dont le principe de fonctionnement repose sur la conversion de l'énergie chimique en énergie électrique par réaction catalytique des réactifs (figures 1 et 2).

Les assemblages membrane-électrodes **1** (AME), appelés communément coeurs de pile, constituent les éléments de base des PEMFC. Ils sont composés d'une membrane polymère **2** et de couches catalytiques **3, 4** présentes de part et d'autre de la membrane. La membrane **2** permet ainsi de séparer les compartiments anodique **5** et cathodique **6.** Les couches catalytiques **3, 4** sont généralement constituées de nanoparticules de platine supportées sur des agrégats de carbone.

En outre, des couches de diffusion gazeuse **7, 8** ou GDL, typiquement réalisées en tissu de carbone ou feutre de carbone, sont disposées de part et d'autre de l'AME **1** pour assurer :
(1) la conduction électrique ;
(2) l'arrivée homogène des gaz réactifs via un système de canaux **9, 10 ;** et
(3) l'évacuation des gaz en excès et de l'eau produite à la cathode **4.**

Dans le cas particulier où les réactifs sont l'hydrogène et l'oxygène (figure 3), à l'anode **3,** la décomposition de l'hydrogène adsorbé sur le catalyseur produit des protons H⁺ et des électrons e⁻ selon la réaction suivante :

H₂ → 2H⁺ + 2 e⁻

Les protons traversent ensuite la membrane polymère **2** avant de réagir avec l'oxygène à la cathode **4.** La réaction des protons avec l'oxygène à la cathode conduit à la formation d'eau et à la production de chaleur :

O₂ + 4H⁺ + 4 e⁻ → 2H₂O

Etant donné que la conductivité ionique de la membrane polymère **2** dépend de sa teneur en eau, le contrôle de la gestion de l'eau au sein de la PEMFC apparaît donc comme essentiel. En effet, la membrane doit être suffisamment humidifiée pour garantir une bonne conductivité ionique, mais pas trop afin d'éviter l'engorgement des sites catalytiques. La présence d'une quantité d'eau liquide trop importante peut ainsi provoquer une chute considérable du rendement de conversion d'énergie, les gaz ne pouvant alors que difficilement accéder aux sites réactifs.

Des solutions ont été proposées afin d'évacuer l'eau produite à la cathode **4,** ou afin d'alimenter l'AME par injection d'eau du côté anodique **3.**

Ainsi, l'art antérieur comprend diverses méthodes destinées à limiter l'engorgement des composants poreux de la couche de diffusion, comme par exemple l'application d'un traitement hydrophobe en PTFE. Ce traitement des composants poreux peut être réalisé en volume ou en surface.

D'autres études ont montré une amélioration de la gestion de l'eau dans une PEMFC par perforation laser de la couche de diffusion du gaz (D. Gerteisen, T. Heilmann, C. Ziegler, « Enhancing liquid water transport by laser perforation of a GDL in a PEM fuel cell », Journal of Power Sources 177 (2008) 348-354). Dans ce document, la couche de diffusion du gaz est perforée à la cathode afin de permettre l'évacuation de l'eau produite à la cathode de la PEMFC.

Par ailleurs, le brevet US 5,952,119 décrit une PEMFC dont la couche de diffusion hydrophobe est traversée par endroits par un fil hydrophile qui n'est pas conducteur électronique Ce fil peut notamment être constitué d'une âme en polyester recouverte de Nafion®, le Nafion® étant un polymère conducteur de protons mais non conducteur d'électrons. Ainsi, le fil hydrophile permet d'alimenter la membrane en eau, par injection d'eau du côté anodique de la PEMFC. Ce document concerne donc l'alimentation de la PEMFC en eau à l'anode, et ce afin de maintenir l'hydratation de la membrane et permettre son fonctionnement dans des conditions optimales, notamment à des températures de l'ordre de 80 à 90°C.

Dans le document US 5,952,119, les trous d'aiguille générés lors de l'incorporation du fil hydrophile sont refermés par compression du compartiment anodique. Le document WO03/096451 décrit une couche de diffusion gazeuse microporeuse comprenant des filaments de carbone creux, hydrophyles et conducterus électriques; ces filaments sont orientés de manière à ce qu'ils n'atteignent pas la couche adjacente.

Il existe cependant un besoin persistant de développer des solutions techniques permettant d'améliorer la gestion de l'eau dans une pile et ainsi d'améliorer ses performances.

### EXPOSE DE L'INVENTION

Ainsi, le Demandeur a mis au point une couche de diffusion du gaz pour PEMFC permettant à la fois de :
- évacuer l'eau liquide produite par la réaction électrochimique à la cathode ;
- maintenir l'hydratation homogène de la membrane ; et
- améliorer les propriétés thermiques et électriques des couches de diffusion gazeuse.

Plus précisément, la présente invention concerne une couche de diffusion gazeuse d'une PEMFC, comprenant au moins un fil hydrophile conducteur électronique au sein de sa structure, ledit fil étant positionné de manière sensiblement perpendiculaire à la surface de la couche de diffusion, et donc à terme, dans la structure finale, à l'AME.

Pour rappel, une PEMFC comporte une membrane polymère et des couches catalytiques présentes de part et d'autre de la membrane formant l'assemblage-membrane-électrodes (AME). En outre, des couches de diffusion gazeuse sont disposées de part et d'autre de l'AME.

De manière générale, une couche de diffusion gazeuse est réalisée en matériau conducteur électronique et poreux. Elle peut être réalisée en tissu de carbone, en feutre de carbone en papier de carbone, en graphite.

Dans un mode de réalisation particulier, la couche de diffusion gazeuse peut être en métal, ou en polymère chargé de particules conductrices électroniques. Ledit polymère peut être un polycarbonate, polypropylène, polyvinylidene fluoride, ou une résine phénolique.

Le métal et les charges peuvent être avantageusement choisis dans le groupe comprenant l'or, le platine, le nickel, le titane, l'aluminium, l'acier inoxydable, l'argent, et plus avantageusement encore l'or, l'argent et le titane.

Une GDL (acronyme anglo-saxon « *Gas Diffusion Layer* » pour couche de diffusion gazeuse) selon la présente invention présente une épaisseur avantageusement comprise entre 100 et 500 micromètres.

Comme déjà dit et de manière caractéristique, ladite couche comprend un fil réalisé en un matériau hydrophile conducteur électronique.

Dans le cadre de la présente invention, par conducteur électronique, on entend un matériau dont la résistivité est de préférence inférieure à 1,3 mohm.cm.

Par ailleurs, par hydrophile, on entend un matériau capable de drainer de l'eau liquide par effet capillaire.

Pour plus de clarté dans la suite de la description, par fil, on entend un fil hydrophile conducteur électronique.

Le fil hydrophile conducteur électronique de la couche de diffusion gazeuse est choisi de manière à ce qu'il n'affecte pas la stabilité chimique de la pile à combustible, de ses composants et réactifs. Il peut être choisi dans le groupe comprenant les fils de carbone, les fils métalliques (or, argent par exemple, ou tout matériau hydrophile conducteur électrique), ou les fils polymères chargés de particules conductrices électroniques. Lesdits polymères peuvent être des polycarbonates, polypropylènes, polyvinylidene fluoride, ou résine phénolique.

Par ailleurs, les charges peuvent être avantageusement choisies dans le groupe comprenant l'or, le platine, le nickel, le titane, l'aluminium, l'acier inoxydable, l'argent, et plus avantageusement l'or, l'argent et le titane.

Le fil hydrophile conducteur électronique est avantageusement un fil en carbone.

Typiquement, le fil hydrophile conducteur électronique présente un diamètre compris entre 10 et 100 micromètres, plus avantageusement entre 45 et 55 micromètres, et plus avantageusement encore de l'ordre de 50 micromètres. Ces dimensions permettent ainsi de limiter les surépaisseurs pouvant éventuellement résulter de la présence d'un fil dans la GDL.

Il est cependant à noter que le diamètre des trous générés par une aiguille lors de l'insertion du fil hydrophile conducteur électronique est généralement deux à quatre fois plus important que le diamètre dudit fil.

De manière avantageuse, au moins un plan de la couche de diffusion gazeuse comprend le ou les fil(s) ; lesdits plans étant inscrits dans l'épaisseur de la couche de diffusion gazeuse. Préférentiellement, le fil est positionné de manière sensiblement perpendiculaire à la surface de la couche de diffusion gazeuse et donc, dans la pile, à l'AME.

Selon un mode de réalisation préféré, le fil hydrophile conducteur électronique est réparti de façon homogène ou hétérogène sur la surface de la GDL (couche de diffusion gazeuse).

De manière avantageuse, le fil est réparti dans l'épaisseur de la couche de diffusion gazeuse, en zigzag, en créneaux, de manière continue et/ou discontinue, de manière aléatoire, ou de manière périodique. Le fil est avantageusement positionné de manière à suivre la structure des canaux d'alimentation des gaz réactifs de la PEMFC.

La couche de diffusion peut comprendre un ou plusieurs fils qui peuvent traverser l'épaisseur de la couche de diffusion gazeuse. Selon un mode de réalisation particulier, des fils de nature ou dimensions différentes peuvent être intercalés dans la couche de diffusion gazeuse.

L'espacement, sur la surface de la GDL, entre chaque fil ou partie de fil est avantageusement compris entre 0.4 et 1 mm.

De manière avantageuse, la surface de la couche de diffusion gazeuse modifiée par le fil représente de 1 à 50%, et avantageusement de 1 à 20% par rapport à la surface totale de la couche de diffusion gazeuse. En d'autres termes, les trous générés par l'aiguille lors de l'insertion du fil hydrophile conducteur électronique représentent de 1 à 50 % de la surface totale de la GDL, et plus avantageusement encore, de 1 à 20 %.

Ainsi, et selon un mode de réalisation particulier, la couche de diffusion gazeuse d'une PEMFC comprend un fil de carbone, de manière à ce que la surface modifiée par le fil de carbone représente de 1 à 20 % de la surface totale du plan de la couche de diffusion gazeuse comprenant le fil pour :
- une température de fonctionnement de la PEMFC comprise entre 60 et 80°C ; et
- une densité de courant comprise entre 0.1 et 1.2 A/cm², de préférence égale à 0.5 A/cm² ; et
- une pression comprise entre 1 et 2 bars, de préférence égale à 1,5 bars.

En effet, ces conditions, notamment cette densité d'insertion du fil, permettent d'atteindre un équilibre entre l'hydratation de la membrane et le taux d'humidification des gaz réactifs de la PEMFC.

La présente invention concerne également le procédé d'élaboration d'une couche de diffusion gazeuse comprenant au moins un fil hydrophile conducteur électronique, selon lequel une étape de structuration de la couche de diffusion gazeuse est réalisée par couture à l'aide d'au moins un fil hydrophile conducteur électronique.

Ledit fil est préférentiellement réparti dans l'épaisseur de la couche de diffusion gazeuse par un procédé qui s'apparente à celui utilisé pour la fabrication des non-tissés de carbone ou de fibres de verre dans les applications aéronautiques.

Dans un mode de réalisation particulier, le fil est avantageusement introduit mécaniquement dans l'épaisseur de la couche de diffusion gazeuse, de manière sensiblement perpendiculaire à l'AME, par couture. Le fil peut ainsi traverser le composant poreux constituant la couche de diffusion gazeuse, et assurer le liage par couture.

De manière avantageuse, le fil est introduit dans l'épaisseur de la couche de diffusion gazeuse, en zigzag, en créneaux, de manière continue et/ou discontinue, de manière aléatoire, ou de manière périodique.

L'utilisation dans une PEMFC de la couche de diffusion gazeuse telle que décrite ci-dessus ou obtenue selon le procédé ci-dessus entre également dans le cadre de la présente invention.

Ainsi et selon un autre aspect, la présente invention concerne également une PEMFC comprenant au moins une couche de diffusion gazeuse telle que décrite ci-dessus.

Une PEMFC selon l'invention comprend au moins une couche de diffusion gazeuse telle que décrite ci-dessus, en contact soit avec l'anode, soit avec la cathode. De manière avantageuse, la PEMFC comprend deux GDL selon l'invention, l'une étant en contact avec la cathode et l'autre étant en contact avec l'anode. Ainsi, l'évacuation de l'eau produite à la cathode, le maintien de l'hydratation de la membrane, et les bons échanges gazeux sont favorisés.

De manière avantageuse, la PEMFC comprend une GDL selon l'invention en contact avec la cathode.

De manière privilégiée, le fil hydrophile conducteur électronique mis en oeuvre dans le cadre de la présente invention n'est pas destiné à l'approvisionnement de l'anode en eau.

En résumé, la présente invention propose une couche de diffusion gazeuse pour pile à combustible de type PEMFC dont les propriétés sont améliorées par rapport à l'art antérieur au niveau de :
- l'approvisionnement en gaz réactifs sur les couches catalytiques ;
- la liaison électrique et thermique entre la zone active (couche catalytique) et les plaques d'amenée de courant (collecteur de courant) ;
- l'évacuation de l'eau produite par la réaction de réduction à la cathode, sans pour autant assécher la membrane.

En effet, la structuration de la couche de diffusion gazeuse à l'aide d'un fil hydrophile et conducteur électronique permet d'homogénéiser l'alimentation en gaz réactif sur la surface de l'électrode. Une plus grande partie du catalyseur, déposé à la surface de la membrane, est ainsi alimentée en gaz réactifs. Cette répartition limite ainsi les problèmes de points chauds liés à l'exothermie de la réaction électrochimique. De plus, l'endommagement mécanique dû à l'introduction du fil crée un trou ou chemin privilégié des gaz, dans l'épaisseur de la couche de diffusion gazeuse.

De plus, l'amélioration des liaisons électrique et thermique entre la zone active et les plaques d'amenée de courant est favorisée par le fil hydrophile conducteur électronique qui présente des conductivités thermique et électrique plus importantes dans le sens longitudinal que dans le sens transversal. L'endommagement mécanique dû à l'introduction dudit fil crée des pilosités en surface améliorant ainsi les résistances de contact électrique entre les interfaces.

Enfin, le fil, ainsi que la présence de trou ou de cavité dans le plan comprenant le fil, favorisent une remontée capillaire. Il en ressort que l'hydratation de la membrane est homogénéisée, évitant ainsi les problèmes d'engorgement. Un équilibre est atteint naturellement via le fil hydrophile, entre le niveau d'hydratation de la membrane et le taux d'humidification des gaz réactifs circulant dans les canaux des plaques bipolaires, l'eau liquide en excès, étant par ailleurs évacuée par ces canaux d'alimentation des gaz réactifs.

L'invention et les avantages qui en découlent ressortiront mieux des figures suivantes.

### DESCRIPTION DES FIGURES

La figure 1 représente le schéma du principe de fonctionnement d'une pile à combustible PEMFC.
La figure 2 représente le schéma du principe de fonctionnement de l'AME d'une pile à combustible PEMFC.
La figure 3 illustre le fonctionnement d'une pile à combustible PEMFC lorsque les réactifs sont l'oxygène à la cathode et l'hydrogène à l'anode.

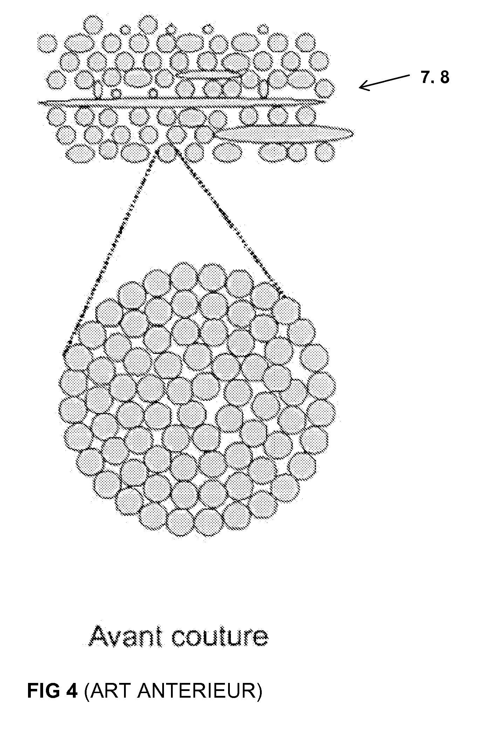

La figure 4 représente la vue en coupe d'une couche de diffusion, ainsi que la vue en gros plan d'une partie de ladite couche de diffusion.

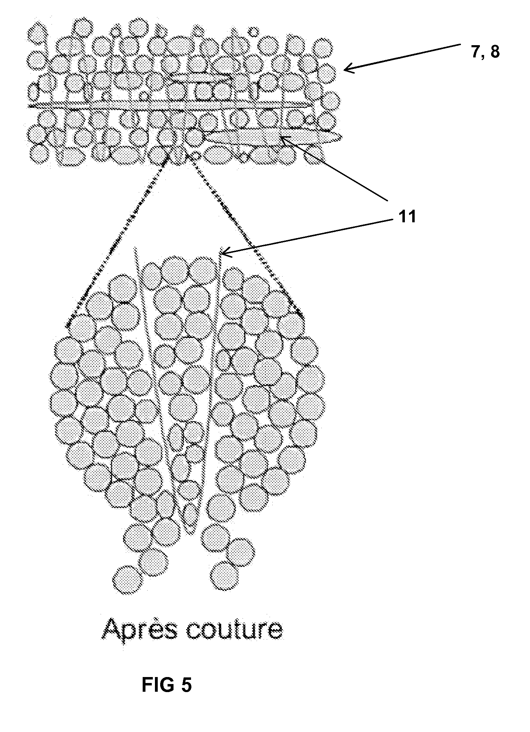

La figure 5 représente la vue en coupe d'une couche de diffusion comprenant un fil hydrophile conducteur électronique selon l'invention. Une vue en gros plan d'une partie de ladite couche de diffusion montre les effets de l'introduction dudit fil sur la structure de la couche de diffusion et notamment les pilosités de surface.

## Revendications

1. Couche de diffusion gazeuse (7, 8) d'une PEMFC comprenant au moins un fil hydrophile conducteur électronique (11) positionné de manière sensiblement perpendiculaire à la surface de la couche de diffusion gazeuse.

2. Couche de diffusion gazeuse selon la revendication 1, ***caractérisée* en ce qu'**elle est réalisée en tissu de carbone, en feutre de carbone, en papier de carbone, en graphite.

3. Couche de diffusion gazeuse selon l'une des revendications 1 et 2, ***caractérisée* en ce que** le fil (11) est choisi dans le groupe comprenant les fils de carbone, les fils en matériau hydrophile conducteur électrique, ou les fils polymères chargés de particules conductrices électroniques.

4. Couche de diffusion gazeuse selon la revendication 3, ***caractérisée* en ce que** le fil (11) est un fil en carbone.

5. Couche de diffusion gazeuse selon l'une des revendications 1 à 4, ***caractérisée* en ce que** le fil (11) présente un diamètre compris entre 10 et 100 µm, plus avantageusement entre 45 et 55 µm.

6. Couche de diffusion gazeuse selon l'une des revendications 1 à 5, ***caractérisée* en ce que** le fil (11) est positionné de manière à suivre la structure des canaux d'alimentation des gaz réactifs (9, 10) de la PEMFC.

7. Couche de diffusion gazeuse selon l'une des revendications 1 à 6, ***caractérisée* en ce que**, la couche de diffusion gazeuse présente une surface modifiée par l'introduction du fil égale à 1 à 50%, et avantageusement à 1 à 20% de la surface totale de la surface de la couche de diffusion gazeuse.

8. Procédé d'élaboration d'une couche de diffusion gazeuse selon l'une des revendications 1 à 7, ***caractérisé* en ce qu'**il comprend une étape de structuration de la couche de diffusion gazeuse (7, 8), réalisée par couture à l'aide d'au moins un fil hydrophile conducteur électronique (11).

9. PEMFC comprenant au moins une couche de diffusion gazeuse selon l'une des revendications 1 à 7.

10. PEMFC selon la revendication 9, ***caractérisée* en ce qu'**elle comprend une couche de diffusion gazeuse (8) en contact avec la cathode (4) de la PEMFC.

## Patentansprüche

1. Gasdiffusionsschicht (7, 8) einer PEMFC, mindestens einen elektronisch leitenden, hydrophilen Faden (11) umfassend, der im Wesentlichen senkrecht zur Oberfläche der Gasdiffusionsschicht positioniert ist.

2. Gasdiffusionsschicht nach Anspruch 1, **dadurch gekennzeichnet, dass** sie aus Kohlenstoffgewebe, Kohlenstofffilz, Kohlenstoffpapier, Graphit hergestellt ist.

3. Gasdiffusionsschicht nach einem der Ansprüche 1 und 2 , **dadurch gekennzeichnet, dass** der Faden (11) aus der Gruppe ausgewählt ist, die Kohlenstofffäden, Fäden aus elektronisch leitendem, hydrophilen Material oder Polymerfäden umfasst, die mit elektronisch leitenden Partikeln angereichert sind.

4. Gasdiffusionsschicht nach Anspruch 3, **dadurch gekennzeichnet, dass** der Faden (11) ein Kohlenstofffaden ist.

5. Gasdiffusionsschicht nach einem der Ansprüche 1 bis 4, **dadurch gekennzeichnet, dass** der Faden (11) einen Durchmesser zwischen 10 und 100 µm, vorteilhafter zwischen 45 und 55 µm aufweist.

6. Gasdiffusionsschicht nach einem der Ansprüche 1 bis 5, **dadurch gekennzeichnet, dass** der Faden (11) so positioniert ist, dass er der Struktur der Zufuhrkanäle der Reaktionsgase (9, 10) der PEMFC folgt.

7. Gasdiffusionsschicht nach einem der Ansprüche 1 bis 6, **dadurch gekennzeichnet, dass** die Gasdiffusionsschicht eine Oberfläche aufweist, die durch Einbringen des Fadens zu gleich 1 bis 50%, und vorteilhafter Weise 1 bis 20% der Gesamtoberfläche der Oberfläche der Gasdiffusionsschicht modifiziert ist.

8. Ausarbeitungsverfahren für eine Gasdiffusionsschicht nach einem der Ansprüche 1 bis 7, **dadurch gekennzeichnet, dass** es einen Strukturierungsschritt der Gasdiffusionsschicht (7, 8) umfasst, der durch Einnähen mittels mindestens eines elektronisch leitenden, hydrophilen Fadens (11) erfolgt.

9. PEMFC, mindestens eine Gasdiffusionsschicht nach einem der Ansprüche 1 bis 7 umfassend.

10. PEMFC nach Anspruch 9, **dadurch gekennzeichnet, dass** sie eine mit der Kathode (4) der PEMFC in Kontakt stehende Gasdiffusionsschicht (8) umfasst.

## Claims

1. A gas diffusion layer (7, 8) of a PEMFC, comprising at least one hydrophilic electronically-conductive thread (11) positioned substantially perpendicularly to the surface of the gas diffusion layer.

2. The gas diffusion layer of claim 1, **characterized in that** it is made of carbon fabric, carbon felt, carbon paper, graphite.

3. The gas diffusion layer of any of claims 1 and 2, **characterized in that** the thread (11) is selected from the group comprising carbon threads, threads of hydrophilic electrically-conductive material, or polymer threads loaded with electronically-conductive particles.

4. The gas diffusion layer of claim 3, **characterized in that** the thread (11) is a carbon thread.

5. The gas diffusion layer of any of claims 1 to 4, **characterized in that** the thread (11) has a diameter ranging between 10 and 100 micrometers, more advantageously between 45 and 55 micrometers.

6. The gas diffusion layer of any of claims 1 to 5, **characterized in that** the thread (11) is positioned to follow the structure of the channels for supplying the reactant gases (9, 10) of the PEMFC.

7. The gas diffusion layer of any of claims 1 to 6, **characterized in that** the gas diffusion layer has a surface area modified by the introduction of the thread equal to from 1 to 50%, and advantageously from 1 to 20% of the total surface area of the gas diffusion layer.

8. A method for forming the gas diffusion layer of any of claims 1 to 7, **characterized in that** it comprises a step of structuring of the gas diffusion layer (7, 8) performed by sewing by means of at least one hydrophilic electronically-conductive thread (11).

9. A PEMFC comprising at least one gas diffusion layer of any of claims 1 to 7.

10. The PEMFC of claim 9, **characterized in that** it comprises a gas diffusion layer (8) in contact with the cathode (4) of the PEMFC.
